# EUROPEAN PATENT SPECIFICATION

(11) **EP 0 370 734 B1**
(45) Date of publication and mention of the grant of the patent: **22.02.1995**
(21) Application number: 89312018.8
(22) Date of filing: 20.11.1989
(51) Int. Cl.: B01D 39/20, B60R 21/26

(54) **Filter for gas producer and method for producing the same**
Filter für Gaserzeuger und Verfahren zu seiner Herstellung
Filtre pour producteur de gaz et procédé de fabrication

(30) Priority: 24.11.1988 JP 296923/88; 16.12.1988 JP 318996/88; 16.12.1988 JP 318997/88
(43) Date of publication of application: 30.05.1990
(60) Divisional application: 94111605.5
(73) Proprietor: NGK INSULATORS, LTD., Nagoya City Aichi Pref. (JP)
(72) Inventor: Maruyama, Katsuhiro, Midori-Ku Nagoya City Aichi Pref. (JP); Minoura, Michinori, Nagoya City Aichi Pref. (JP)
(74) Representative: Paget, Hugh Charles Edward

(56) References cited:
- EP-A- 0 012 627
- EP-A- 0 270 510
- DE-A- 1 816 118
- DE-A- 3 717 204
- US-A- 1 774 232
- US-A- 2 334 263

## Description

This invention relates to a filter for a gas producer used for example for expanding a bag for producing floating force and an air bag for protecting a person during collision of a vehicle, closing or opening a valve in emergency, injecting a gas into a seat in emergency. The invention also relates to a method of producing the filter.

Systems using high temperature gases produced by igniting gunpowder have been widely used as gas producers. In this case, filters are needed for cooling the gases and collecting harmful components in the gases in order to avoid damage of bags and the like.

Various filters for this purpose have been disclosed. For example, JP-A-51-60,333 discloses a filter having a cooling chamber filled with straight metal wires or rods, a filter having a casing in which laminating stainless wire meshes (plain weave) cut corresponding to inner sizes of the casing are arranged, and a filter using steel wool, metallic or ceramic foaming materials, metallic buffer plates and the like.

However, as the straight metal wires or rods are not elastic, clearances would occur between the chamber wall and the wires so that gases flow through short-circuits formed by the clearances, and the filter is bulky and troublesome to set the wires therein. Moreover, because the wire meshes have no elasticity either, the above short-circuits are likely to occur and it is very troublesome to alternately laminate wire meshes of the order of 20-300 mesh.

Moreover, the steel wool is expensive and tends to melt in high temperature gases. The foaming materials are also expensive and inferior in permeability and elasticity. The buffer plates are inferior in collection effect of harmful products and make the system bulky and complicated in construction.

EP-A-12627 describes a filter made of wires which are individually crimped in two planes and formed into a compressed laminate.

EP-A-271510 describes a filter made of screw-shaped (helical) long wires of a mainly rectangular cross-section, compressed together.

It is an object of the invention to provide a filter for a gas producer which eliminates or reduces disadvantages of the prior art and which can be small in size and useful and easy to charge in the gas producer and able to prevent short-circuits of gases, melting down and reduction of permeability.

It is another object of the invention to provide a method of producing such a superior filter for a gas producer.

A filter for a gas producer according to the invention is set out in claim 1
A method of producing a filter for a gas producer according to the invention is set out in claim 5
In a preferred embodiment according to the invention, the curved wire as wave-shaped or spiral wire is wound about a rotating column body to obtain an annular laminate which is supplied into an annular space in a die assembly to be compressed.

In another preferred embodiment, in compressing the laminate, it is compressed halfway to obtain a primary formed product and wires separately prepared as binding wires are wound around sections of the primary formed product and further compressed to obtain a filter, or the primary formed product is further compressed by a groove forming die assembly consisting of a male die having on its outer surface longitudinal grooves and a female die having in its inner surface longitudinal ridges to be fitted in the grooves of the male die to obtain a filter having in its outer circumference longitudinally extending grooves.

In this invention, various heat-resistant steel wires can be used, for example, stainless, nickel alloy, cobalt alloy steel wires and the like. If a wire diameter of the steel wire is less than 0.1 mm, there is a risk of melting down. On the other hand, if it is more than 1.5 mm, it becomes difficult to form the wire into a curved wire because of increased resistance to deformation and a filter made of the wire includes excessive clearances resulting in poor cooling for gases passing therethrough and poor collection of harmful compositions.

The heat-resistant steel wire may be a usual long wire made by drawing it through a drawing die. Moreover, a short wire of the order of 50-300 mm made according to a method called as "melt extraction method" is inexpensive and preferable. In the melt extraction method, a rotating water-cooled disc is brought into contact with a surface of a molten steel so as to pick up a small amount of the molten steel to form fine fiber-like wires accumulated on a lateral side.

In the invention, the a wire is deformed into a wave-shaped wire deformed substantially in one plane and further wave-shaped in a plane different from the one plane according to the invention. A curved wire obtained by deforming in two different planes in this manner is particularly preferable because wire parts deformed in cubic waves tend to entangle with each other in later winding or compressing process. Therefore, a filter made of such a wire is difficult to deform and keeps its original shape, is good in dimensional accuracy, and uniform in the interior of the filter and has less directional property.

According to the invention the pitch of the wave in the first plane is different from that of the wave in the second plane. If pitches of waves in the two processes are substantially equal or similar to each other, wire parts will twist to make difficult the later process.

In coiling a heat-resistant steel wire to form a curved wire, it is preferable to form a coil-shaped wire having a pitch of 1-5 mm and a coil diameter of 3-6 mm because wire parts are suitably entangled to form a unitary compressed product without excessive clearances between the wire parts.

Moreover, the bulk specific gravity of a filter according to the invention can be adjusted by compression-forming. If the bulk specific gravity of a filter is less than 1, the filter is bulky and large-sized. On the other hand, a bulk specific gravity more than 3 will increase resistance against gas flows disadvantageously.

In one method of the invention for producing a filter for a gas producer, after a heat-resistant steel wire has been worked into a curved wire, the curved wire is directly supplied into an annular space of a die assembly and compressed into an annular product. Therefore, the processes are simple and the initial cost for an installation is inexpensive. A filter obtained by final compression into annular shape is a compressed formed product made of a curved wire so that the compressed product is elastic and in close contact with an inner wall surface of a casing and curved wire parts are entangled with each other so as to form a unitary body which is difficult to deform and is easy in handling.

In a preferred embodiment of the invention, after binding wires are wound around sections of a primary formed product, the primary formed product with the binding wires is further compressed into an annular shape to obtain a filter. Therefore, the binding wires of the filter prevent the wire parts from loosening. Even if short curved wires are used, ends of the short curved wires are prevented from extending laterally and the filter is more difficult to deform and is easy to handle.

According to another preferred embodiment of the invention, an annular filter having in its outer circumference a plurality of grooves extending in axial directions is made only by a compression-forming process without a troublesome manual operation. Because the grooves are formed by local compression, the grooves prevent the wires of the filter from loosening. Even if short curved wires are used, ends of the short curved wires are prevented from extending laterally and the filter is more difficult to deform and is easy to handle.

Embodiments of the invention will be more fully described by way of example, in connection with the appended drawings.
Figs. 1a-1d are explanatory views of processes for producing a filter according to a first embodiment of the invention;
Fig. 2 is a sectional view illustrating a used condition of the filter shown in Fig. 1e;
Figs. 3a-3d are explanatory views of processes for producing a filter according to a second embodiment of the invention; and
Figs. 4a-4e are explanatory views of processes for producing a filter according to an third embodiment of the invention.

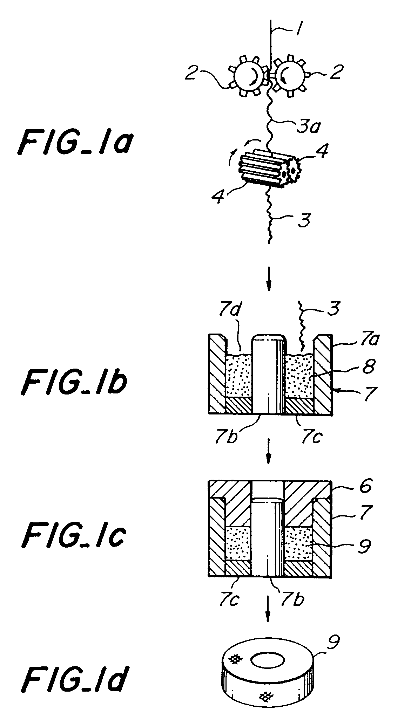

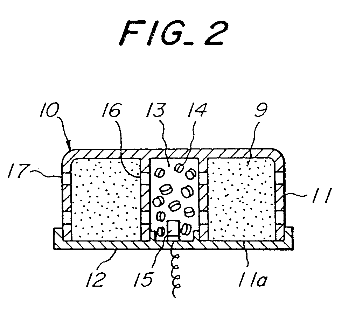

Figs. 1 and 2 illustrate a first embodiment of the invention. A stainless steel wire (heat-resistant steel wire to be used at high temperatures of 1,000-1,300°C) 1 made by the melt extraction method and having a wire diameter of 0.4 mm and a length of 50-100 mm is passed between gears 2 in mesh with each other with clearances so as to be bent in a plane to form a primary wave-shaped wire 3a having a pitch of 7 mm and a wave height of 4 mm. Thereafter, the primary wave-shaped wire 3a is passed between gears 4 arranged below the gears 2 and having axes substantially perpendicular to those of the gear 2, so that the wire 3a is bent in a wave having a pitch of 3.4 mm and a wave height of 2 mm in a plane different from the above plane to form a multi-plane wave-shaped wire or curved wire 3 (Fig. 1a).

The multi-plane wave-shaped wire 3 is supplied in an annular space 7d of a lower die or female die 7 of die assembly consisting of an upper die or male die 6 and the lower die 7 to form a laminated filling layer 8 (Fig. 1b). The laminated layer 8 is pressed by the upper die 6 to form an annular filter 9 having a bulk specific gravity of 1.5 by press-forming (Figs. 1c and 1d). Moreover, the upper die 6 is in the form of a hollow cylinder, while the lower die 7 consists of an outer cylindrical die part 7a, an inner rod-shaped die part 7b and a bottom plate 7c in the form of a liftable disc having a center hole.

The obtained filter 9 is made of the curved wire 3 sufficiently entangled so that the filter 9 is difficult to deform or superior in keeping its shape and good in accuracy and has uniform clearances therein and less directional property.

The filter 9 is press-fitted in an annular cooling filter chamber 11a in a casing 11 of a gas producer 10 and closed by a cap 12 as shown in Fig. 2. The filter 9 is elastic and formed in a unitary body to keep its shape so that it can be readily fitted in the casing 11 by a single operation.

When a gas producing agent 14 charged in a combustion 13 is ignited by an igniter 15, the gas producing agent 14 is exploded and fired to produce high temperature gases. The high temperature gases pass via gas apertures 16 through the filter 9 during which the gases are cooled and harmful products therein are collected. Thereafter, the gases are jetted through gas jetting openings 17 out of the gas producer 10 to be supplied to an apparatus using the gas such as an air bag and the like.

The invention is not limited to the above embodiment. For example, although the annular filling layer 8 is compressed in the axial direction, it may be compressed in radial directions in addition to the axial compression.

As can be seen from the above description, according to the invention it is possible to produce in simple processes a filter for a gas producer, which is small and useful and easy to mount onto the gas producer and is capable of preventing short-circuiting of gases, melting down and lowering in permeability and widely applicable to various gas producers.

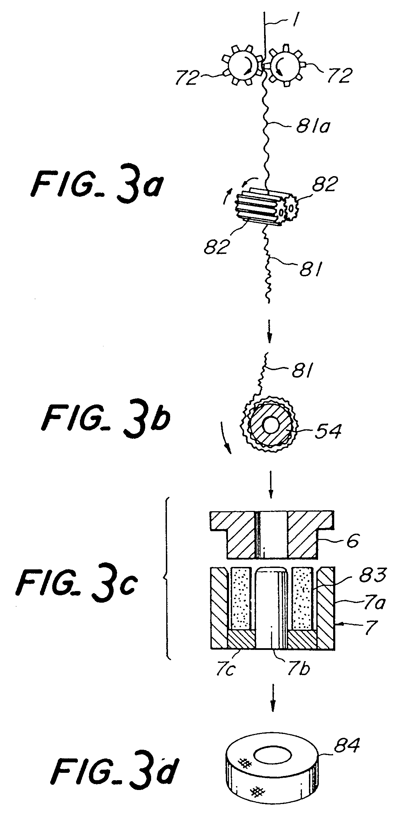

Figs. 3a-3d illustrate a second embodiment of the invention. A stainless steel wire 1 (heat resistant wire produced by drawing through a conventional die and having a diameter of 0.4 mm) is passed between gears 72 which mesh with clearance to obtain a primary wave-shaped wire 81a bent in a plane having a pitch of 7 mm and a wave height of 4 mm. Thereafter, the primary curved wire 81a is passed between gears 82 arranged below the gears 72 and having axes substantially perpendicular to those of the gears 72, so that the primary curved wire 81a is bent in a wave having a pitch of 3.4 mm and a wave height of 2 mm in a plane different from the above plane to form a multi-plane wave-shaped wire or curved wire 81 (Fig. 3a).

The curved wire 81 is wound about a rotating column body 54 (Fig. 3b) to obtain an annular laminate 83 which is then compressed by a die assembly consisting of an upper die or male die 6 and a lower die or female die 7 to obtain an annular filter 84 having a bulk specific gravity 1.5 (Fig. 3c and 3d).

The obtained filter 84 is made of the curved wire 81 sufficiently entangled so that the filter 84 is difficult to deform and has good shape retention, and has uniform clearances therein and less directional property.

Various changes and modification may be made in the second embodiment, e.g. substantially in the same manner as explained after the first embodiment. In the second embodiment, the laminate 83 may be further subjected, after the primary forming, to winding by binding wires and further press-forming.

Figs. 4a-4e illustrate a third embodiment of the invention. A long stainless steel wire (heat-resistant steel wire) 1 produced by drawing through a conventional die and having a diameter of 0.4 mm was passed between gears 2 to obtain a primary wave-shaped wire 3a bent in a plane having a pitch of 7 mm and a wave height of 4 mm which is then passed between gears 4 to obtain a wire 3 in the same manner as in the first embodiment. Therefore, the wire 3a is bent in a wave having a pitch of 3.4 mm and a wave height of 2 mm in a pitch different from the above plane to form a two-plane wave-shaped wire or curved wire 3 (Fig. 4a).

The curved wire 3 is substantially uniformly laminated on a flat plate and passed between a pair of rotating rolls so as to be compressed into a sheet-like member which is then cut into narrow width members to obtain belt-like laminates 105 (Fig. 4b). As an alternative, in order to eliminate the cutting process, the laminated wire 3 may be passed between the rolls to directly obtain a belt-like laminate 105.

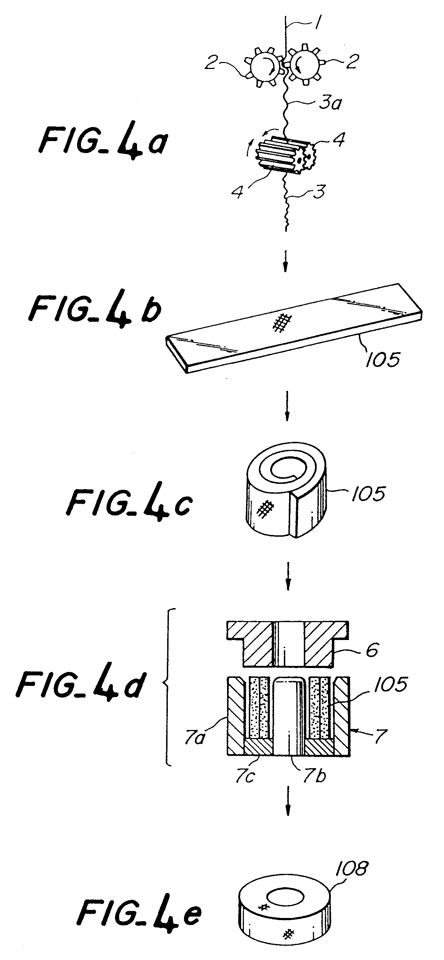

The laminate 105 is wound thereon as shown in Fig. 4c and is arranged in a die assembly consisting of an upper die or male die 6 and a lower die or female die 7 and compressed in the same manner as in the first embodiment to obtain an annular filter 108 having a bulk specific gravity of 1.5 (Figs. 4d and 4e).

The obtained filter 108 is made of the curved wire 3 sufficiently entangled so that the filter 108 is difficult to deform and is superior in shape retention and good in accuracy and has uniform clearances therein and less directional property.

Various changes and modification may be made in the third embodiment, e.g. substantially in the same manner as those explained after the first embodiment.

As can be seen from the above description, the filter compressed formed body made of curved wires is small, resilient and easy to mount on a gas producer and is capable of preventing short-circuiting of gases and of selecting diameters of starting heat-resistant steel wires according to gas temperatures to be applied to prevent melting down and lowering in permeability due to high temperature gases.

## Claims

1. A filter for a gas producer comprising at least one wire (3,22,53,73,81) of wire diameter in the range of 0.1-1.5 mm having wavy curvature in two planes, said said wire or wires being formed into a compressed body (9,26,30,58,84,96,108,126,130) of entangled wire, characterised in that the or each said wire has wavy curvature in a first plane of a first pitch and first height and wavy curvature, in a second plane different from said first plane having a second pitch and a second height different from said first pitch and first height.

2. A filter for a gas producer as set forth in claim 1, wherein the filter is annular and is formed in its outer circumference with grooves (31,95,131) extending in axial directions.

3. A filter for a gas producer as set forth in claim 1 or claim 2, having a bulk specific gravity in the range of 1.0-3.0.

4. A filter for a gas producer as set forth in any one of claims 1 to 3 wherein the or each said wire has a length of at least 50 mm.

5. A method of producing a filter for a gas producer comprising the steps of forming at least one wire (3,22,53,73,81) of wire diameter in the range of 0.1-1.5 mm having wavy curvature in the plane into an annular body, and compressing the body, characterised in that the or each wire has a wavy curvature in a first plane of a first pitch and first height and wavy curvature, in a second plane different from said first plane having a second pitch and a second height different from said first pitch and first height.

6. A method as set forth in claim 5 wherein the or each said wire has a length of at least 50 mm.

7. A method as set forth in claim 5 or claim 6, wherein the wire or wires having wavy curvature are obtained by a process including passing a wire between gears (2,4,72,82) in mesh with each other with clearances between them.

8. A method as set forth in claim 5 or claim 6, wherein the wire or wires having wavy curvatures are obtained by a process including passing a wire between gears (2,72) in mesh with each other with clearance between them to obtain a wire with a wavy curvature in a first plane and then passing the wire between gears (4,82) in mesh with each other with clearance between them to obtain the wire having wavy curvature in a second plane different from the first.

9. A method as set forth in any one of claims 5 to 8, wherein the wire or wires having wavy curvatures are supplied into an annular space in a die assembly (7,42) to form a body to be compressed.

10. A method as set forth in any one of claims 5 to 8, wherein the wire or wires having wavy curvatures are wound about a rotating mandrel (54) to obtain an annular body which is supplied into an annular space in a die assembly to be compressed.

11. A method as set forth in any one of claims 5 to 8, wherein the wire or wires having wavy curvature are substantially uniformly laminated to form a narrow width body which is compressed into a sheet-like member (105,123), and the sheet-like member is wound upon itself and supplied into an annular space in a die assembly to be compressed.

12. A method as set forth in claim 11, wherein said narrow width body is compressed by passing it between a pair of rotating rolls.

13. A gas producer having means for producing gas and at least one filter for the gas, which filter is according to any one of claims 1 to 4

## Patentansprüche

1. Filter für einen Gaserzeuger, umfassend zumindest einen Draht (3, 22, 53, 73, 81) mit einem Drahtdurchmesser im Bereich von 0,1 - 1,5 mm mit wellenförmiger Biegung in zwei Ebenen, wobei der Draht oder die Drähte zu einem zusammengepreßten Körper (9, 26, 30, 58, 84, 96, 108, 126, 130) aus verschlungenem Draht geformt wird oder werden, dadurch gekennzeichnet, daß der oder jeder Draht eine wellenförmige Biegung in einer ersten Ebene mit einem ersten Wellenabstand und einer ersten Höhe und eine wellenförmige Biegung in einer zweiten, von der ersten Ebene verschiedenen Ebene mit einem zweiten Wellenabstand und einer zweiten Höhe, die sich vom ersten Wellenabstand und der ersten Höhe unterscheiden, aufweist.

2. Filter für einen Gaserzeuger wie in Anspruch 1 beschrieben, worin der Filter ringförmig ist und an seinem äußeren Umfang Vertiefungen (31, 95, 131) ausgebildet sind, die sich in axialen Richtungen erstrecken.

3. Filter für einen Gaserzeuger wie in Anspruch 1 oder 2 beschrieben, mit einer spezifischen Gesamtdichte im Bereich von 1,0 - 3,0.

4. Filter für einen Gaserzeuger wie in irgendeinem der Ansprüche 1 - 3 beschrieben, worin der Draht oder jeder der Drähte eine Länge von zumindest 50 mm aufweist.

5. Verfahren zur Herstellung eines Filters für einen Gaserzeuger, umfassend die Schritte: Formen zumindest eines Drahtes (3, 22, 53, 73, 81) mit einem Drahtdurchmesser im Bereich von 0,1 - 1,5 mm mit einer wellenförmigen Biegung in der Ebene zu einem ringförmigen Körper und Zusammenpressen des Körpers, dadurch gekennzeichnet, daß der oder jeder Draht eine wellenförmige Biegung in einer ersten Ebene mit einem ersten Wellenabstand und einer ersten Höhe und eine wellenförmige Biegung in einer zweiten, von der ersten Ebene verschiedenen Ebene mit einem zweiten Wellenabstand und einer zweiten Höhe, die sich vom ersten Wellenabstand und der ersten Höhe unterscheiden, aufweist.

6. Verfahren wie in Anspruch 5 beschrieben, worin der oder jeder Draht eine Länge von zumindest 50 mm aufweist.

7. Verfahren wie in Anspruch 5 oder 6 beschrieben, worin der Draht oder die Drähte mit wellenförmiger Biegung nach einem Verfahren erhalten wird oder werden, das das Hindurchführen eines Drahtes zwischen mit Zwischenraum zueinander kämmenden Zahnrädern (2, 4, 72, 82) umfaßt.

8. Verfahren wie in Anspruch 5 oder 6 beschrieben, worin der Draht oder die Drähte mit wellenförmigen Biegungen nach einem Verfahren erhalten wird oder werden, das das Hindurchführen eines Drahtes zwischen mit Zwischenraum zueinander kämmenden Zahnrädern (2, 72), um einen Draht mit einer wellenförmigen Biegung in einer ersten Ebene zu erhalten, und anschließend das Hindurchführen des Drahtes zwischen mit Zwischenraum zueinander kämmenden Zahnrädern (4, 84), um einen Draht mit einer wellenförmigen Biegung in einer zweiten, von der ersten verschiedenen Ebene zu erhalten.

9. Verfahren wie in irgendeinem der Ansprüche 5 - 8 beschrieben, worin der Draht oder die Drähte mit wellenförmiger Biegung in einen ringförmigen Raum einer Formeinrichtung (7, 42) eingebracht wird oder werden, um einen zusammenzupressenden Körper zu bilden.

10. Verfahren wie in irgendeinem der Ansprüche 5 - 8 beschrieben, worin der Draht oder die Drähte mit wellenförmigen Biegungen um eine rotierende Spindel (54) gewickelt wird oder werden, um einen ringförmigen Körper zu erhalten, der in einen ringförmigen Raum einer Formeinrichtung eingebracht wird, um zusammengepreßt zu werden.

11. Verfahren wie in irgendeinem der Ansprüche 5 - 8 beschrieben, worin der Draht oder die Drähte mit wellenförmiger Biegung im wesentlichen einheitlich geschichtet wird oder werden, um einen schmalen Körper zu bilden, der zu einem blattförmigen Bauteil (105, 123) zusammengedrückt wird, und der blattförmige Baute auf sich selbst gewickelt und in einen ringförmigen Raum einer Formeinrichtung eingebracht wird, um zusammengepreßt zu werden.

12. Verfahren wie in Anspruch 11 beschrieben, worin der schmale Körper durch Hindurchführen zwischen zwei rotierenden Walzen zusammengedrückt wird.

13. Gaserzeuger mit Einrichtungen zur Herstellung von Gas und zumindest einem Filter für das Gas, wobei der Filter nach irgendeinem der Ansprüche 1 - 4 beschaffen ist.

## Revendications

1. Filtre pour un producteur de gaz, comprenant au moins un fil (3,22,53,73,81) d'un diamètre de fil dans la plage de 0,1-1,5 mm présentant une courbure ondulée dans deux plans, le ou lesdits fils étant formés en un corps comprimé (9,26,30,58,84,96,108,126,130) de fil enchevêtré, caractérisé en ce que le ou chacun desdits fils a une courbure ondulée dans un premier plan d'un premier pas et d'une première hauteur, et une courbure ondulée, dans un plan différent dudit premier plan ayant un deuxième pas et une deuxième hauteur différents dudit premier pas et de ladite première hauteur.

2. Filtre pour un producteur de gaz selon la revendication 1, dans lequel le filtre est annulaire et présente dans sa circonférence extérieure des rainures (31,95, 131) s'étendant suivant des directions axiales.

3. Filtre pour un producteur de gaz selon la revendication 1 ou la revendication 2, possédant une gravité spécifique d'encombrement dans la plage de 1,0-3,0.

4. Filtre pour un producteur de gaz selon l'une des revendications 1 à 3, dans lequel le ou chacun desdits fils a une longueur d'au moins 50 mm.

5. Procédé de fabrication d'un filtre pour un producteur de gaz, comprenant les étapes consistant à former au moins un fil (3,22,53,73,81) d'un diamètre de fil dans la plage de 0,1-1,5 mm d'une courbure ondulée dans le plan en un corps annulaire, et à comprimer le corps, caractérisé en ce que le ou chaque fil a une courbure ondulée dans un premier plan d'un premier pas et d'une première hauteur, et une courbure ondulée, dans un deuxième plan différent dudit premier plan ayant un deuxième pas et une deuxième hauteur différents dudit premier pas et de ladite première hauteur.

6. Procédé selon la revendication 5, dans lequel le ou chaque fil a une longueur d'au moins 50 mm.

7. Procédé selon la revendication 5 ou la revendication 6, dans lequel le ou les fils ayant des courbures ondulées sont obtenus par un procédé incluant l'étape consistant à faire passer un fil entre des engrenages (2,4,72,82) engrenant l'un avec l'autre, en laissant subsister des jeux entre ceux-ci.

8. Procédé selon la revendication 5 ou la revendication 6, dans lequel le ou les fils ayant des courbures ondulées sont obtenus par un procédé comprenant les étapes consistant à faire passer un fil entre des engrenages (2,72) engrenant l'un avec l'autre, avec un jeu entre eux, afin d'obtenir un fil avec une courbure ondulée dans un premier plan et à faire passer le fil entre des engrenages (4,82) engrenant l'un avec l'autre, avec un jeu entre eux, afin d'obtenir le fil ayant une courbure ondulée dans un deuxième plan différent du premier.

9. Procédé selon l'une des revendications 5 à 8, dans lequel le ou les fils ayant des courbures ondulées sont introduits dans un espace annulaire dans un ensemble à filières (7,42) pour former un corps à comprimer.

10. Procédé selon l'une des revendications 5 à 8, dans lequel le ou les fils ayant des courbures ondulées sont enroulés autour d'un mandrin tournant (54) afin d'obtenir un corps annulaire qui est introduit dans un espace annulaire dans un ensemble à filières pour être comprimé.

11. Procédé selon l'une des revendications 5 à 8, dans lequel le ou les fils ayant des courbures ondulées sont laminés sensiblement uniformément afin de former un corps de largeur étroite qui est comprimé en un élément en forme de feuille (105, 123), et l'élément en forme de feuille est enroulé sur lui-même et introduit dans un espace annulaire dans un ensemble à filières pour être comprimé.

12. Procédé selon la revendication 11, dans lequel ledit corps de largeur étroite est comprimé en le faisant passer entre une paire de rouleaux tournants.

13. Producteur de gaz possédant un moyen pour produire du gaz et au moins un filtre pour le gaz, ce filtre étant réalisé conformément à l'une des revendications 1 à 4.
